# EUROPEAN PATENT SPECIFICATION

(11) **EP 1 167 919 B1**
(45) Date of publication and mention of the grant of the patent: **12.10.2005**
(21) Application number: 00909681.9
(22) Date of filing: 16.03.2000
(51) Int. Cl.: G01B 11/24, G01N 21/956, C10B 57/00, F27D 21/00

(54) **Wall surface observing device with y movement**
Wandflächenüberwachung mit y Bewegung
Observation de surface de paroi avec movement y

(30) Priority: 16.03.1999 JP 7094899
(43) Date of publication of application: 02.01.2002
(73) Proprietor: NIPPON STEEL CORPORATION, Tokyo 100-8071 (JP)
(72) Inventor: KAGIYA, Takanori, Nippon Steel Corporation, Futtsu City, Chiba 293-0011 (JP); NAITO, Shuji, Nippon Steel Corporation, Futtsu City, Chiba 293-0011 (JP); SUGIURA, Masato, Nippon Steel Corporation, Futtsu City, Chiba 293-0011 (JP); YOKOMIZO, Masahiko, Nippon Steel Corporation, Futtsu City, Chiba 293-0011 (JP); SAKAIDA, Michitaka, Nippon Steel Corporation, Futtsu City, Chiba 293-0011 (JP)
(74) Representative: Vossius & Partner
(86) International application number: PCT/JP2000/001612
(87) International publication number: WO 2000/055575

(56) References cited:
- EP-A- 0 727 658
- EP-A1- 0 121 617
- JP-A- 53 009 142
- JP-A- 59 202 003
- JP-A- 61 029 708
- JP-U- 63 010 407
- US-A- 4 893 933

## Description

### Technical Field:

This invention relates to an apparatus for observing the surface condition of a wall surface. More particularly, this invention relates to an inner wall surface profile observation apparatus for a coke oven chamber (EP-A2-727 658).

### Background Art:

A coke oven, for example, is continuously operated for a long period of 30 to 40 years under severe conditions, and refractory bricks constituting a carbonization chamber of the coke oven gradually degrade due to thermal and mechanical factors through repetition of heating and coke pushing operations over a long period of time. Depending on the degree of progress of degradation of the refractory bricks of the carbonization chamber, difficulty in pushing the coke and destruction of the brick wall can occur. When such phenomena occur, major repair work becomes necessary and this greatly affects oven operation. Therefore, it is of utmost importance for the operation of the coke oven and for the management of the setup to measure the oven width at each point in the direction of depth and in the direction of height of the carbonization chamber, to acquire a side wall surface profile (concavo-convexity, bending and inclination of the wall surface), to determine the degree of distortion of the inner shape of the carbonization chamber and degradation of the refractory bricks as well as the tendency of the change in degradation, and to manage the repair work. Many proposals have therefore been made in the past to measure the width, etc, of the carbonization chamber.

Japanese Unexamined Patent Publication (Kokai) No. 7-243812, for example, describes a wall surface wear amount measuring method in which a distance sensor is fitted to a ram head at a distal end of a coke pushing machine, and detects the distance of the wall surface from the ram head at the time of pushing of the coke. Japanese Unexamined Patent Publication (Kokai) No. 7-243975 describes an image processing method in which images of a wall surface are taken by a CCD camera, the image data are processed and a brick surface is separated from a joint. Further, Japanese Unexamined Patent Publication (Kokai) No. 7-316559 describes a carbonization chamber profile measuring method in which a pair of range finders for detecting a chamber wall surface distance are mounted on a ram and a reflecting mirror for turning back and reflecting a laser beam from a rear end direction to a ram distal end is provided and, the laser beam emitted by a laser range finder is reflected outside the chamber by the reflecting mirror, and a carbonization chamber invasion distance at the ram distal end is detected by the laser range finder.

In the method for measuring the wall surface distance by use of a range finder, measurement accuracy is low owing to inclination, bending, vibration, etc, of the ram. To reduce measurement errors, it has been customary to measure the inclination and bending and to compensate for errors resulting from positional errors of the ram head. Though this method can improve measurement accuracy, the computation is complicated. As one range finder can measure the distance of only one point, high-density measurement is difficult. As the density becomes higher, the computation amount becomes even greater and generation of the evaluation data of degradation of the wall surface becomes more complicated. It is therefore desirable to conjointly install an observation apparatus capable of acquiring the measurement data that can be used for easy evaluation of wall surface degradation. In the wall surface wear amount measuring method of Japanese Unexamined Patent Publication (Kokai) No. 7-243812 described above, in which a distance sensor is fitted to the ram head and the distance of the wall surface from the ram head is detected during pushing of the coke, an additional sensor is provided to correct the sensor position. However, since this correction is serially conducted on a one-by-one, step-by-step basis, correction errors accumulate. In other words, this method has a problem in that positional errors of the distance,sensor due to thermal deformation of the ram inside the oven cannot be sufficiently corrected. In connection with imaging the wall surface, an observation method in which the wall surface is imaged by a CCD camera is known. Using this method, a relatively broad wall surface can be imaged in one image. However, because the wall surface emits light under red-hot conditions the S/N is low and the detection accuracy for wall surface defects that can be observed on the imaging screen is low, too.

### Disclosure of the Invention:

It is a first object of the present invention to provide an observation apparatus capable of evaluating a wall surface condition relatively easily. It is a second object of the invention to provide an observation apparatus having high detection accuracy of concavo-convexities in the wall surface. It is a third object of the invention to provide an observation apparatus capable of recognizing deformation of an oven wall of a coke oven chamber resulting from damage and the size and depth of a local defect portion. In other words, the gist of the present invention resides in the following points.
(1) A wall surface observation apparatus comprising a light source for emitting laser beams inclined to an axis orthogonally crossing the z-axis on a plane inclusive of the z axis, and forming laser spots on an observation object surface; an imaging means for imaging the laser spots, having a visual field substantially having expansion in a z direction; and
   a support table having the light source and the imaging means mounted thereon.
(2) A wall surface observation apparatus according to (1), which further comprises reflection means for reflecting the laser spots on the observation object surface, mounted on the support table in front of the imaging means.
(3) A wall surface observation apparatus comprising a light source for emitting laser beams inclined to an axis orthogonally crossing a z axis on a plane inclusive of the z axis, and forming laser spots on an observation object surface; imaging means for imaging the laser spots, having a visual field substantially having expansion in a z direction; driving means for driving and rotating the light source and the imaging means round the z axis as the center; a support table for supporting the driving means; and reflection means for reflecting laser beams emitted from the light source to the observation object surface, and reflecting the laser spots of the observation object surface to the imaging means, provided on the support table in front of the imaging means in a y direction.
(4) A wall surface observation apparatus according to any of (1) to (3), wherein the imaging means is a linear image camera for imaging the z direction in a line segment form.

### Brief Description of Drawings:

FIG. 1 is a perspective view showing the appearance of an embodiment of the present invention.
FIG. 2 is an enlarged longitudinal sectional view of light transmission portions (3a) and (4a) of a vertical pole (1) shown in FIG. 1.
FIG. 3(a) is a horizontal sectional view of the vertical pole (1) and a mirror tube (2) shown in FIG. 1 at the light transmission plate portion (3a).
FIG. 3(b) is a perspective view showing laser spots (S1) to (S4) formed on a vertical surface by laser beams (P1) to (P4) when they go out from laser beam sources (8a1) to (8a4) shown in FIG. 2 and are reflected by a mirror surface (9L1), and a summary of optical paths when a camera (5a) takes images of these spots.
FIG. 4(a) is a plan view showing a summary of a slicing processing of an image data group of a memory storing the image data of a camera inside the vertical pole (1) shown in FIG. 1.
FIG. 4(b) is a plan view showing an outline of a data processing for determining a laser spot starting point in the sliced image data group.
FIG. 4(c) is a graph showing a spot trajectory obtained by tracing a spot position from the starting point.
FIG. 5 is a plan view showing extraction and processing of object image data of an image processing for tracing a spot position from a laser spot starting point.

### Best Mode for Carrying Out the Invention:

Next, an embodiment of the present invention will be explained in detail with reference to the accompanying drawings. Incidentally, reference numerals in parentheses represent corresponding constituent elements in the embodiment that will be shown and explained later in order to have the invention more easily understood.

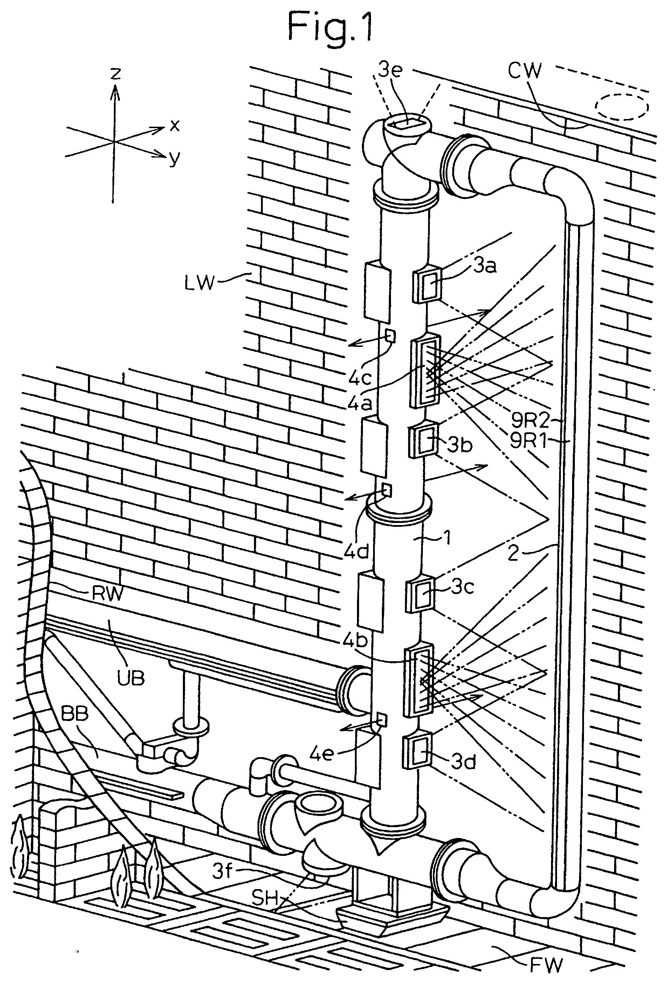

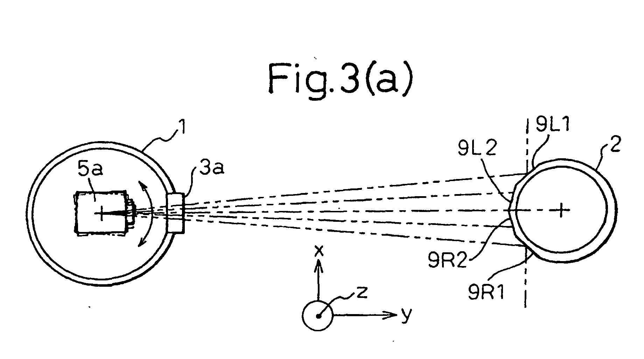

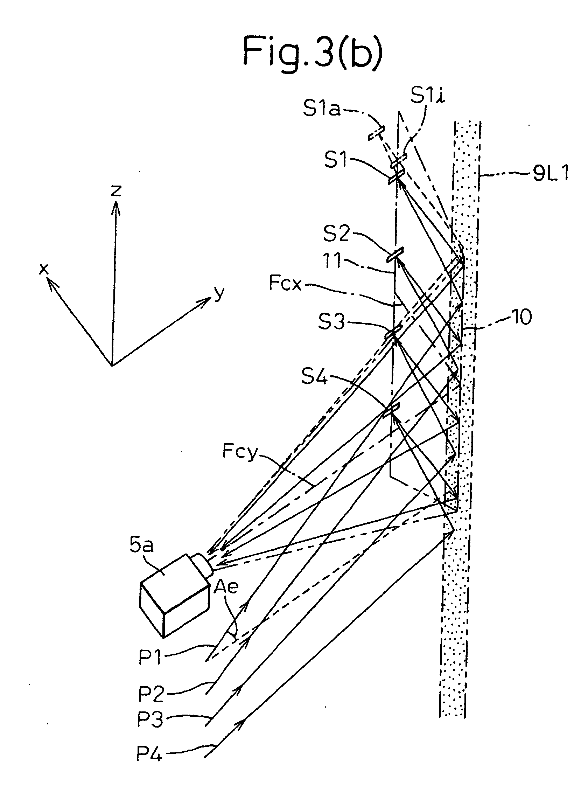

A wall surface observation apparatus according to the present invention includes a light source (8a1) for emitting a laser beam (P1) inclined (Ae) relative to an axis crossing a z axis on a plane inclusive of the z axis, and forming a laser spot (S1/S1a) on an observation object surface (LW) as shown in FIGS. 1 and 3(b); imaging means (5a) for imaging the laser spot (S1/S1a), having a visual field having expansion substantially in the z direction; and a support table (SP1) to (SP3), (1), (2) having the light source (8a1) and the imaging means (5a) mounted thereon.

When the laser beam (P1) is inclined (Ae: FIG. 3(B)) relative to the y axis, the laser spot (S1) assumes a predetermined position in the z direction when the observation object surface is a complete plane that is parallel to the y-z plane. When the support table (SP1 to SP3, 1, 2) is driven in the y direction, the trajectory of the laser spot (S1) describes a straight line parallel to the y axis. The laser spot image is at a constant position on the imaging screen of the imaging means (5a).

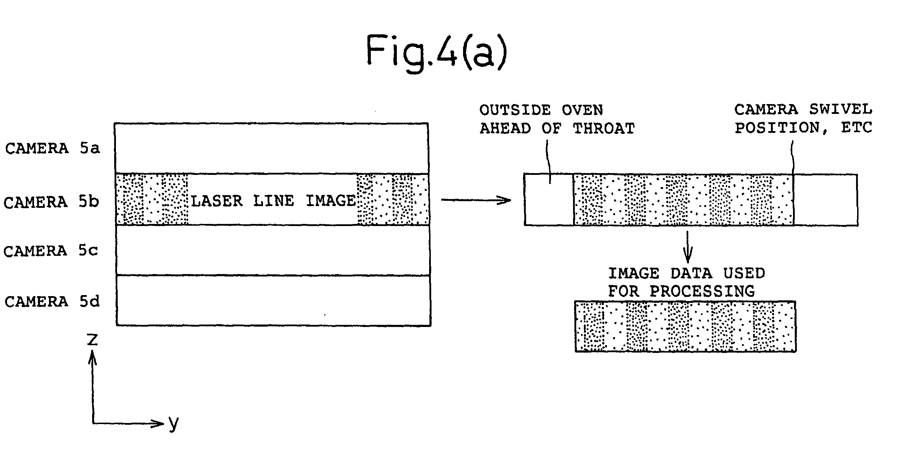

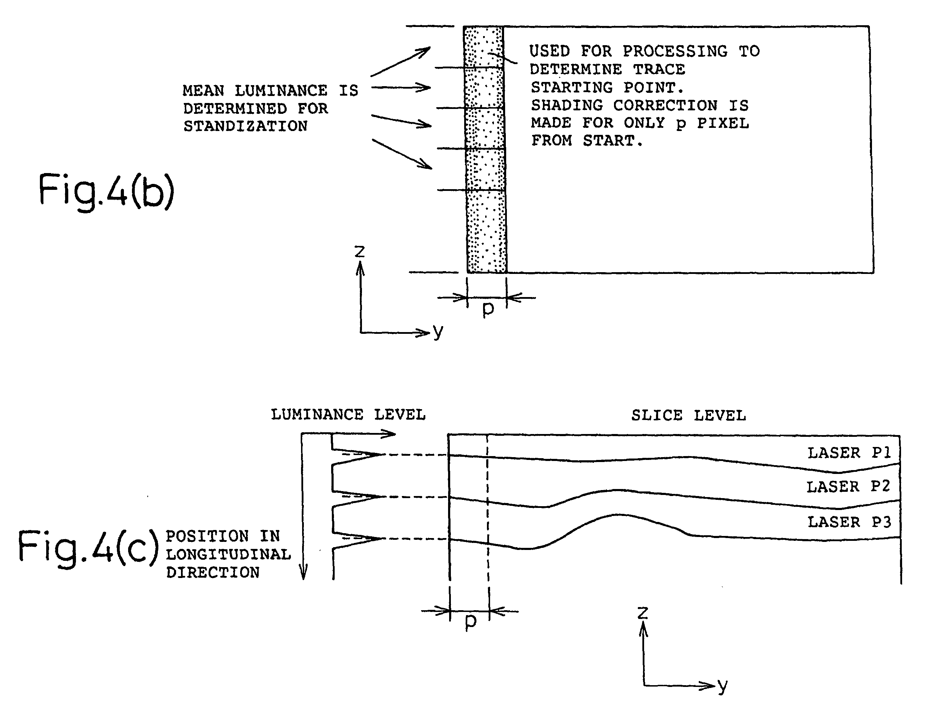

When the camera (5a) is above the laser light source (8a1), the laser spot that should be at (S1) in FIG. 3(b) becomes a spot (S1a) shifted by the depth of a recess in the wall thickness direction x if a recess is present in the observation object surface. This shift, i.e., the depth of the recess, deviates upward from the constant position described above in the z direction, and the laser spot (S1i) deviates in the z direction on the screen of the imaging means (5a) (see FIG. 4(c), for example). When the support table (SP1 to SP3, 1, 2) is driven in the y direction, the trajectory of the laser spot describes an upward protruding curve at the recess position. When the z position of the laser spot image appearing on the imaging screen of the imaging means (5a) is plotted in such a fashion as to correspond to the y position, a chain of plots likewise describes an upward protruding curve at the recess position. Therefore, any corrugation of the surface can be known by checking whether a curve or a step different from the straight line is present on the z position trajectory of the laser spot image on the imaging screen of the imaging means (5a).

In addition to the construction described above, the wall surface observation apparatus according to the present invention includes reflecting means (9L1, 9L2) for reflecting the laser spot (S1/S1a) of the observation object surface (LW) to the imaging means (5a) using a linear image camera, disposed ahead of the imaging means (5a) and fitted to the support table (SP1 to SP3, 1, 2) as shown in FIGS. 1 to 3. This construction provides an image similar to the one obtained by imaging the inner wall surface in the plane opposite to the inner surface inside a narrow coke oven chamber, and recognition and slicing of the laser spot image on the screen can be made easily and correctly.

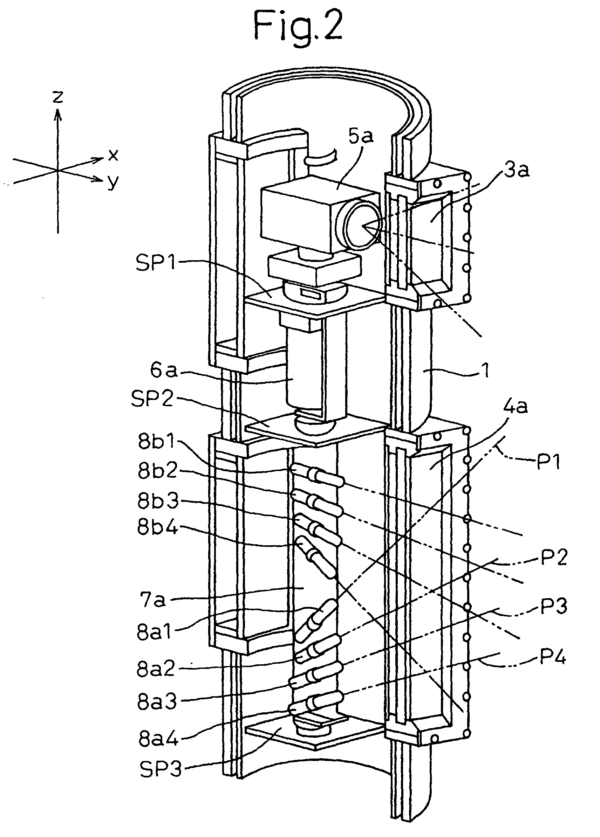

As shown in FIGS. 2 and 3, the wall surface observation apparatus according to the present invention further includes a light source (8a1) for emitting a laser beam (P1) inclined relative to an axis crossing a z axis on a plane inclusive of the z axis, and forming a laser spot (S1/S1a) on an observation object surface (LW); imaging means (5a) for imaging the laser spot (S1/S1a), having a visual field having expansion substantially in the z direction; driving means (6a) for driving and rotating the light source (8a1) and the imaging means (5a) with the z axis as the center; a support table (SP1 to SP3, 1, 2) for supporting the driving means (6a); and reflecting means (9L1, 9L2, 9R1, 9R2) for reflecting the laser (P1) emitted from the light source (8a1) to the observation object surface (LW, RW) and reflecting the laser spot (S1/S1a) of the observation object surface (LW, RW) to the imaging means (5a).

According to this construction, the two vertical wall surfaces (LW, RW) of the coke oven chamber opposing each other can be selectively observed while the driving means (6a) switches the direction of the light source (8a1) and the imaging means (5a) to the reflection surface opposing one (LW) of the wall surfaces or to a reflection surface opposing the other (RF).

The imaging means (5a) mounted on the wall surface observation apparatus described above is a linear image camera for imaging the wall surface in the form of line segments (11) in the z direction. According to this construction, while the support table (SP1 to SP3, 1, 2) is being moved in the y direction, the image data of the segment-like imaging screen of the imaging means (5a) extending in the z direction are written into the y-z plane image memory in such a fashion as to correspond to the y position and are then displayed on a two-dimensional display. In consequence, the image of the trajectory of the laser spot corresponding to the moving trajectory of the laser spots on the observation object surface (substantial y-z plane) appears, and recesses, protuberances, curves and inclinations (curve portions in FIG. 4(c)) can be recognized.

### Embodiment:

FIG. 1 shows an embodiment of the present invention. A hollow base beam BB and a hollow upper beam UB are parallel beams and are fixed integrally with each other. A hollow vertical pole (1) is integrally fixed to these beams in such a fashion that their internal spaces continue one another. A mirror tube (2) parallel to the vertical pole (1) is fixed also in such a fashion that their internal spaces continue each other. The base beam BB, upper beam UB, vertical pole (1) and mirror tube (2) are double tubes, and cooling water flows between the inner tube and the outer tube. The assembly of these members will be hereinafter called a "water-cooling lance".

Four peep holes for vertical wall-imaging cameras closed by light transmission plates (3a) to (3d) are formed on the side of the vertical pole (1). Two windows for emitting linear laser beams closed by light transmission plates (4a) and (4b) are formed on the side surface of the vertical pole (1). Three pairs, or 6 sets in total, of windows for transmitting laser beams of range finders (3 pairs or 6 sets in total), that are closed by light transmission plates (4c) to (4e), are further formed on the side surface of the vertical pole (1). The laser range finders are used to measure distances of a left vertical wall surface LW and a right vertical wall surface RW. One peep window for a ceiling surface-imaging camera, which window is closed by a light transmission plate (3e), is formed at the upper end of the vertical pole (1). One peep window for a floor surface-imaging camera, closed by a light transmission plate (3f), is formed at the lower end of the vertical plate (1).

A shoe SH placed on the floor surface is disposed at the lower end position of the vertical pole (1), and the distal end portion of the water-cooling lance is supported through the shoe SH. The rear end of the water-cooling lance is fitted to pushing ram of a coke pushing machine not shown in the drawings. When the mirror tube (2) and the vertical pole (1) are inserted into the coke oven chamber from the oven throat of the chamber and the water-cooling lance is pushed into the chamber by the coke pushing machine, the mirror tube (2) and the vertical pole (1) move in the horizontal y direction and enter into the depth of the chamber. FIG. 1 shows the state where the mirror tube (2) and the vertical pole (1) are present inside the coke oven chamber. The right part in FIG. 1 represents the depth side of the chamber and the left part the oven throat side. The vertical wall surface on the left side when the depth of the chamber is viewed from the throat is called the "left wall surface LW" and the vertical wall surface on the right side, the "right wall surface RW".

FIG. 2 is an enlarged longitudinal sectional view of the portions of the light transmission plates (3a) and (4a) of the vertical pole (1). A first linear image camera (5a) is so disposed inside the vertical pole (1) as to oppose the light transmission plate (3a). A first set of laser projectors (8a1) to (8a4) and a second set of laser projectors (8b1) to (8b4) are disposed inside the light transmission plate (4a). A first electric motor (6a) having a built-in reduction gear is interposed between the first camera (5a) and the laser projectors and is fixed to the vertical pole (1). The camera (5a) and the support plate (7a) are coupled with a rotary shaft (output shaft) of the electric motor (6a), and the first and second sets of laser projectors (8a1) to (8a4) and (8b1) to (8b4) are fixed to the support plate (7a).

The first set of laser projectors (8a1) to (8a4) form the laser spot that the camera (5a) above them images. The second set of laser projectors (8b1) to (8b4) form the laser spot that a second linear image camera (5b), not shown, images. The camera (5b) opposes the light transmission plate (3b) (FIG. 1), and corresponds to the first camera (5a) when it is moved down in the z direction. The camera (5b) is fixed to the vertical pole (1) and is coupled with a rotary shaft of a second electric motor (6b) having a built-in reduction gear, not shown, in the same way as the camera (5a). However, the laser projectors are not coupled with the second camera (5b) and the electric motor (5b).

When the electric motor (6a) rotates in the normal direction while the first camera (5a) and the first and second laser projectors (8a1) to (8a4) and (8b1) to (8b4) aim at the tubular axis of the mirror tube (2), the camera (5a) and the laser projectors (8a1) to (8a4) and (8b1) to (8b4) simultaneously rotate by the same angle in the direction facing the left wall surface LW. When the electric motor (6a) rotates in the reverse direction, they rotate in the direction facing the right wall surface RW. The second camera (5b), too, is driven for rotation by the electric motor (6b) so as to attain the same visual field direction as that of the camera (5a) in the same direction, though its visual field position is different in the z direction.

Assuming that two sets of cameras (5a), (5b), the laser projectors (8a1) to (8a4), (8b1) to (8b4) and the electric motors (6a), (6b) constitute one group, a second group having a similar construction is present in the region of the light transmission plates (3c), (4b) and (3d). In other words, the third camera (5c) corresponding to the first camera (5a) is present inside the light transmission plate (3c), third and fourth laser projectors (8c1) to (8c4) and (8d1) to (8d4) corresponding to the first and second laser projectors (8a1) to (8a4) and (8b1) to (8b4) are present inside the light transmission plate (4b), and the fourth camera (5d) corresponding to the second camera (5b) is present inside the light transmission plate (3d).

FIG. 3(a) shows the horizontal section of the vertical pole (1) and the mirror tube (2). As described above, the cameras and the laser projectors can be driven for rotation with the vertical z axis as the center. The mirror tube (2) has a first left mirror surface (9L1) for observing the front surface 90° of the left wall surface LW, a second left mirror surface (9L2) for observing oblique 45°, and a first right mirror surface (9R1) for observing the front surface of the right wall surface RW and a second right mirror surface (9R2) for observing oblique 45°. When the camera {and the laser projectors (8a1) to (8a4)} is rotated to the position aiming at the first left mirror surface (9L1), for example, the laser beams (P1) to (P4) emitted by the laser projectors (8a1) to (8a4) strike the first left mirror surface (9L1) and are reflected, and then impinge against the left wall surface LW. In consequence, a laser spot (short line: having a width of 30 mm in the y direction and 2 mm in the z direction on the y-z reference plane in this embodiment) appears. Since the wall surface is a microscopically rough surface, the laser beam is scattered from the laser spot in each direction. A part of the scattered laser beams impinges against the left mirror surface (9L1), is reflected by it and enters the camera (5a).

The camera (5a) is a linear image camera for imaging in the z direction. When it aims at the first left mirror surface (9L1), for example, a straight line 10 extending in the z direction in FIG. 3(b) (with a certain width in the x direction) represents the visual field of imaging. The centerline Fcy of the imaging center is horizontal when the water-cooling lance is horizontal and extends substantially in the y direction. The projection line of the visual field centerline Fcy on the y-z plane is parallel to the y axis.

When the laser beam is obliquely incident from the edge of the camera visual field, the transmission wavelength of the band-pass filter shifts to a shorter wavelength. Therefore, the laser projectors (8a1) to (8a4) emit a laser beam of 685 nm for forming a spot in the proximity of the center of the visual field of the camera (5a) and a laser beam of a wavelength of 670 nm at the peripheral portion of the visual field.

FIG. 3(b) shows the optical paths (solid lines) of the laser beams (P1) to (P4) emitted from the first set of laser projectors (8a1) to (8a4) and the laser spots (S1) to (S4) appearing on the wall surface. Incidentally, the above mentioned spots (S1) to (S4) are represented where the wall surface is vertical and is a complete plane.

The laser beam (P1) emitted from the laser projector (8a1) and reaching the mirror surface (9L1) is present on the plane inclusive of the centerline of the visual field of the camera (5a) and the z axis. Moreover, it describes an upward angle Ae with respect to the centerline of the visual field Fcy that is substantially horizontal. The laser beams (P2) to (P4) emitted by the other laser projectors (8a2) to (8a4), too, incline upward with respect to the centerline of the visual field Fcy. When the laser beam (P1) is taken into consideration, in particular, the spot (S1) of the laser beam (P1) appears on the wall surface, provided that the visual field of the camera (5a) on the wall surface through the mirror surface (11) in FIG. 3(b) and the wall surface is a complete vertical plane. Here, when the wall surface lowers (the distance between the mirror surface and the wall surface increases), the spot of the laser beam (P1) on the wall surface moves from (S1) to (S1a) because the laser beam (P1) has the inclination of the angle Ae to the horizontal line (Fcy). The spot image moves from (S1) to (S1i) on the screen of the camera (5a). In other words, the spot image shifts upward. On the other hand, when the wall surface becomes nearer (the distance between the mirror surface and the wall surface decreases), the spot image shifts downward. In other words, the laser spot image of the imaging screen of the camera shifts upward at a position where the wall surface is recessed, and shifts downward at a position where the wall surface protrudes.

Since the camera (5a) (and (5c)) is positioned above the laser projectors (8a1) to (8a4) ((8c1) to (8c4)), the laser spot image on the imaging screen shifts upward at the position where the wall surface is recessed and shifts downward at the position where the wall surface protrudes, as described above. However, since the camera (5b) (and (5d)) is positioned below the laser projectors (8b1) to (8b4) ((8d1) to (8d4)), the laser spot image on the imaging screen shifts downward at the position where the wall surface is recessed and shifts upward at the position where the wall surface protrudes.

In this embodiment, when the laser beams (P1) to (P4) represent the laser spots (S1) to (S4) distributed with the distribution pitch of the furnace wall bricks in the z direction on the y-z reference vertical plane and the observation object plane is the brick surface forming the y-z reference vertical plane, the laser spots (S1) to (S4) appear at the center of the bricks in the z direction in the z direction distribution.

The laser beams (P1) to (P4) are linear as a whole. In order to allow the camera (5a) to take an image even when the laser spot deviates from each reference position (S1) to (S4) in the y direction, the cross-sectional shape is narrow in the z direction on the y-z vertical plane but is broad in the y direction(short line: 30 mm wide in the y direction on the y-z reference plane and 2 mm wide in the z direction in the z direction in this embodiment). On the basis of the principle of measurement that observes the positional deviation of the wall surface in the x direction by use of the linear image camera (5a) having the visual field of the substantial straight line ((11) in FIG. 3(b)) extending in the z direction, the width of the spot shapes of the laser beams (P1) to (P4) appearing on the y-z reference vertical plane may be great in the y direction but is preferably as small as possible in the z direction so long as the spot beams can be detected with high S/N on the image signal of the camera (5a). A laser beam source that provides a large beam width in the y direction and has uniform luminance is large in scale and high in cost. Therefore, this embodiment uses a compact and economical laser beam source that provides a rectangular spot that is low in width in the z direction but is wide in the y direction to the maximum possible extent relative to the light source.

Returning to FIG. 2, the second set of laser projectors (8b1) to (8b4) emit their laser beams at a downward inclination relative to the mirror tube (2). The combination of the second camera (5b) disposed inside the light transmission plate (3b) and not shown with the second set of laser projectors (8b1) to (8b4) has substantially a vertical symmetric relation with the first camera (5a) and the first set of laser projectors (8a1) to (8a4) with respect to the center point of the light transmission plate (4a), and takes an image of the laser spot in the same way as the first camera (5a). Since the second camera (5b) is positioned below the laser projectors (8b1) to (8b4) on the screen of the second camera (5b), the laser spot image on the imaging screen shifts downward at the position where the wall surface is recessed and shifts upward at the position where the wall surface protrudes.

Referring again to FIG. 1, assemblies similar to the combination, i.e., the assembly of the first camera (5a), the first and second sets of laser projectors (8a1) to (8a4), (8b1) to (8b4) and the second camera (5b) (disposed inside the light transmission plate (3b)) are positioned inside the light transmission plates (3c), (4b) and (3d). Therefore, when a large number of laser beams ((P1), etc) go out from the vertical pole (1) towards the mirror tube (2), are reflected by the mirror tube (2) and impinge against the wall surface, a large number of laser spots ((S1), etc) that are substantially distributed in the brick pitch appear on the wall surface in the z direction. One linear image camera ((5a), etc) is disposed inside each of the light transmission plates (3a) to (3d), or four cameras in total. These cameras take the images of a plurality of laser spots through the mirror surface of the mirror tube (2), respectively. Referring to FIG. 3(a), when the camera (and the laser beam) focusing direction is directed to the first left mirror surface (9L1), an image of the left wall surface LW as viewed in the direction opposing the front surface can be acquired, and when this focusing direction is directed to the second left mirror surface (9L2), the image creates the left wall surface LW at a skew angle of 45°. Further, when this focusing direction is directed to the first right mirror surface (9R1), the image of the right wall surface RW as viewed in the direction opposing the front surface can be obtained.

One linear image camera having a visual field that covers the full width of the ceiling surface (y direction) and the full width of the floor surface (y direction) is fitted inside the up facing light transmission plate (3e) at the upper end of the vertical pole (1) and the down facing transmission plate (3f) at the lower portion of the vertical pole (1). These cameras directly image the ceiling surface and the floor surface, respectively. To facilitate identification of concavo-convexities on the wall surface, the centerline of the visual field of these cameras is set to an angle of 45° (to aim at 45°) relative to the horizontal plane.

All of the base beam BB, the upper beam UB, the vertical pole (1), the mirror tube (2) and the relay tubes for connecting the former members are stainless steel double pipes having high heat resistance. Cooling water flows between the inner tube and the outer tube of these double tubes and cools them from inside. Mirror surfaces (9L1), (9L2), (9R1) and (9R2) of the mirror tube (2) are formed by polishing the surface of the stainless steel tube to a flat surface, then by conducting mirror surface polishing to change it to a mirror surface and applying chromium plating. The mirror surface, too, is highly heat resistant.

Next, the mode of use of the wall surface observation apparatus described above will be explained. The aiming direction of the camera (5a) is set to the first right mirror surface (9R1) or the second right mirror surface (9R2). While the water-cooling lance (BB + UB + 1 + 2) is being advanced into the coke oven chamber, the image signals corresponding to one line of each camera inside the light transmission plate (3a) to (3d) are subjected to A/D conversion whenever one movement sync pulse, that is generated every time the water-cooling lance moves 1 mm, is generated, i.e., when the water-cooling lance moves 1 mm in the y direction. The digital signals are written in the memory area for the right wall surface for each camera and at the same time, the image signals of the cameras inside the light transmission plate (3e) and (3f) for one line are also subjected to A/D conversion and the resulting signals are written into the memory areas for the ceiling surface and for the floor surface, respectively. Moreover, the measured distance data of range finders (6, in total) inside the light transmission plates (4c) to (4e) (6, in total) are written into memory areas for the range finders. Since the water-cooling lance moves in a zigzag or while oscillating to the right and left, a zigzag sensor and an inclination meter, not shown in the drawings, are provided at the distal end portion so as to correct the concavo-convexity calculation value. The measurement values of these devices are also written into the memory.

When the measurement described above is completed for substantially the full length of the coke oven chamber, the aiming direction of the camera (5a) is set to the first left mirror surface (9L1) or to the second left mirror surface (9L2), and the measurement is carried out similarly while the water-cooling lance (BB + UB + 1 + 2) is being moved back. However, since imaging of the ceiling furnace and the floor surface has already been completed, imaging by each camera inside the light transmission plate (3e), (3f) does not need to be conducted.

Next, processing of the image data of the right wall surface acquired as described above will be explained. The image data of each camera of the memory area for the right wall surface is serially designated and the image data of an unnecessary portion is discarded as shown in FIG. 4(a). Next, shading correction is applied to the image data from the starting edge entering the throat to the starting edge of p mm in the z direction. Next, as shown in FIG. 4(b), the starting edge region having a width of p mm in the z direction is divided into small regions. The mean luminance of each of the divided regions is determined so as to normalize the image data inside each region. In other words, the image data is converted to luminance difference data for mean luminance. The luminance difference data at the same pixel position is added up for each pixel position in the z direction, and the pixel position in the z direction at which the added value attains the peak is determined as the starting point (y0, z0) of the trajectory of the laser spots as shown in FIG. 4(c).

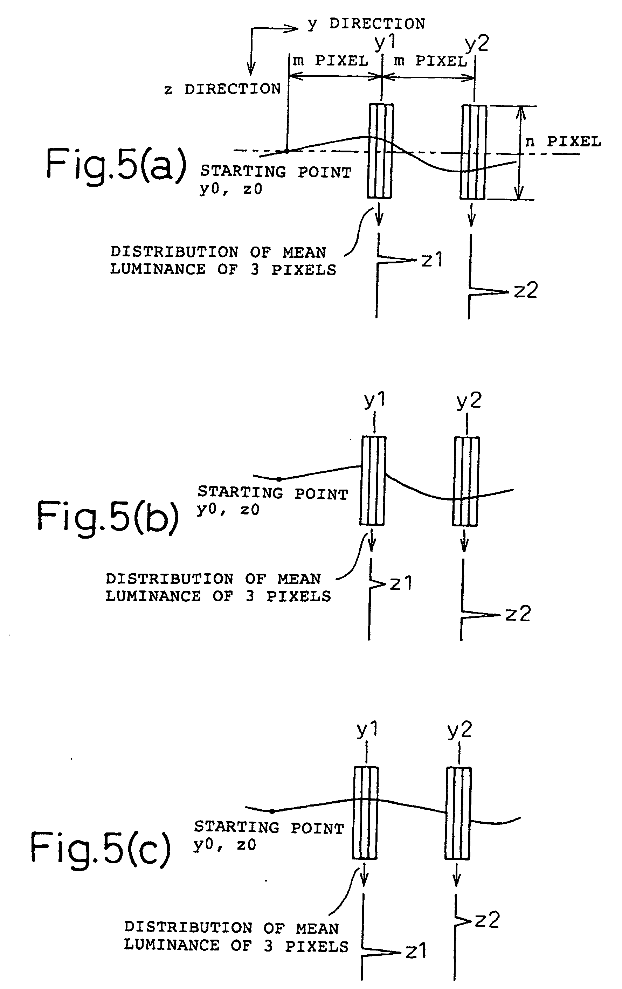

As shown in FIG. 5(a), the luminance mean value of the three pixels in the y direction at a position y1 = y0 + m, at which the pixel advances by m pixels (mm) from the starting point y0 in the y direction, determines the luminance peak position z1 in the z direction. This z1 value is recorded into the spot trajectory memory in such a fashion as to correspond to y1. Next, the image data group of the n pixels at the position y2 = y0 + 2m, at which the pixel advances by m pixels from y1 in the y direction, with z1 in the z direction being the center, is subjected to the filtration processing in the z direction to determine the luminance peak position z2 in the z direction. This z2 value is written into the spot trajectory memory in such a fashion as to correspond to y2. Thereafter, a similar processing is repeated to trace the spot trajectory, and the spot position data in the z direction is written into the spot trajectory memory in the m pitch in the y direction.

When the luminance peak value extracted from the image data group of the n pixels extracted at the yi position is lower than a set level (or when the spot is ambiguous), the pixel is advanced by one pitch (one pixel) in the y direction, the peak position z(i + 1) at he y(i + 1) position is calculated, and zi is set to [z(i - 1) + z(i + 1)]/2.

In other words, when the laser line is ambiguous at the y1 position as shown in FIG. 5(b), the z1 value is set to an intermediate value between 0 and z2 if the luminance peak of the z coordinates at y1 is lower than a certain level. When the laser line is ambiguous at the y2 position as shown in FIG. 5(c), z2 is not defined, but calculation is carried out by regarding (y1, z1) as new (y0, z0) if the luminance peak of the z coordinates at y2 is lower than a certain level.

After the trace of the spot trajectory is completed as described above, the z position of the spot trajectory memory is displayed on a two-dimensional (y, z) display in such a fashion as to connect the pixels adjacent to one another in the y direction by lines. In consequence, the spot trajectory (horizontal lines) appears as the "slice image" shown in FIG. 4(c). The positions above and below these horizontal lines in the z direction correspond to the concavo-convexity position on the wall surface, and the difference (Δz) of the upper and lower peak positions in the z direction relative to the y parallel lines correspond to the depth or height of the concavo-convexities (Δx). The horizontal lines are inclined with respect to the y axis at the positions at which the observation surface is inclined or curved, and the angle of inclination corresponds to the angle of inclination of the observation surface or its bending radius.

### Industrial Applicability:

As described above, the embodiment of the present invention can acquire measurement data representing concavo-convexity, inclination and bending of a wall surface on the basis of the principle of triangular surveying for substantially the full length of a coke oven chamber. Since a plurality of laser beams are simultaneously shot in superposition with the image of the furnace wall, a damage position (y, z) can be easily recognized and the distortion of the laser spots resulting from oscillation can be easily distinguished. Since a damage portion can be easily associated with the brick position, the repair position (for spray repair, for example) can be precisely stipulated.

## Claims

1. A wall surface observation apparatus comprising:
a light source (8a, 8b) for emitting laser beams (P1, P2, P3, P4) inclined to an axis orthogonally crossing a z axis on a plane inclusive of said z axis, and forming laser spots (S1, S2, S3, S4) on an observation object surface;
imaging means (5a, 5b, 5c, 5d) for imaging the laser spots, having a visual field substantially having expansion in a z direction;
a support table (sp1, sp2, sp3, 1.2) having said light source and said imaging means mounted thereon;
moving means for moving said support table in a y direction;
memory means for storing shot image data at a plurality of y positions, taken by said imaging means; and
a two-dimensional display for displaying a movement trajectory of the laser spots on said observation object surface on the basis of the shot image data stored in said memory means.

2. A wall surface observation apparatus according to claim 1, which further comprises reflection means (9L1, 9L2, 9R1, 9R2) for reflecting the laser spots on said observation object surface, mounted on said support table in front of said imaging means.

3. A wall surface observation apparatus according to claim 1 or 2, wherein said imaging means is a linear image camera for imaging the z direction in a line segment form.

## Patentansprüche

1. Ein Überwachungsvorrichtung für Wandoberflächen, aufweisend:
eine Lichtquelle (8a, 8b) zum Emittieren von Laserstrahlen (P1, P2, P3, P4), die zu einer Achse geneigt sind, die eine z-Achse auf einer Ebene, die die besagte z-Achse enthält, orthogonal kreuzt, und Laserspots (S1, S2, S3, S4) auf der Oberfläche eines Überwachungsobjekts bilden;
eine Abbildungseinrichtung (5a, 5b, 5c, 5d) zum Abbilden der Laserspots, die ein Blickfeld aufweisen, das im Wesentlichen eine Ausbreitung in einer z-Richtung aufweist;
einen Trägertisch (Sp1, Sp2, Sp3, 1, 2), auf dem die Lichtquelle und die Abbildungseinrichtung montiert ist;
ein Antriebssystem zum Bewegen des Trägertisches in eine y-Richtung;
eine Speichereinrichtung zum Speichern aufgenommener Bilddaten bei mehreren y-Positionen, die mit der Abbildungseinrichtung aufgenommen wurden; und
eine zweidimensionale Anzeige zum Darstellen einer Bewegungstrajektorie der Laserspots auf der Oberfläche des Überwachungsobjekts auf der Basis der in der Speichereinrichtung gespeicherten aufgenommenen Bilddaten.

2. Überwachungsvorrichtung für Wandoberflächen gemäß Anspruch 1, die weiterhin eine Reflexionseinrichtung (9L1, 9L2, 9R1, 9R2) aufweist, die auf dem Trägertisch vor der Abbildungseinrichtung montiert ist, zum Reflektieren der Laserspots auf die Oberfläche des Überwachungsobjekts.

3. Überwachungsvorrichtung für Wandoberflächen gemäß Anspruch 1 oder 2, wobei die Abbildungseinrichtung eine lineare Bildkamera zum Abbilden der z-Richtung in einer Liniensegmentform ist.

## Revendications

1. Dispositif d'observation de surface de paroi, comprenant :
une source de lumière (8a, 8b) destinée à émettre des faisceaux laser (P1, P2, P3, P4) inclinés par rapport à un axe coupant d'une façon orthogonale un axe z sur un plan comprenant ledit axe z, et formant des taches de laser (S1, S2, S3, S4) sur la surface d'un objet d'observation ;
des moyens d'imagerie (5a, 5b, 5c, 5d) destinés à imager les taches de laser, dont le champ visuel grandit sensiblement dans une direction z ;
une table de support (SP1, SP2, SP3, 1, 2) sur laquelle sont montés ladite source de lumière et lesdits moyens d'imagerie ;
des moyens de déplacement destinés à déplacer ladite table de support dans une direction y ;
des moyens de mémoire destinés à stocker des données d'image instantanée en une pluralité de positions y, prises par lesdits moyens d'imagerie ; et
un affichage bidimensionnel pour afficher une trajectoire de déplacement des taches de laser sur la surface dudit objet d'observation sur la base des données d'image instantanée stockées dans ladite mémoire.

2. Dispositif d'observation de surface de paroi selon la revendication 1, comprenant en outre des moyens de réflexion (9L1, 9L2, 9R1, 9R2) réfléchissant les taches de laser sur la surface dudit objet d'observation, montés sur ladite table de support en face desdits moyens d'imagerie.

3. Dispositif d'observation de surface de paroi selon la revendication 1 ou 2, dans lequel lesdits moyens d'imagerie sont constitués par une caméra à image linéaire destinée à imager de la direction z en une forme de segment de ligne.
